# FASCICULE DE BREVET EUROPEEN

(11) **EP 3 259 979 B1**
(45) Date de publication et mention de la délivrance du brevet: **18.12.2019**
(21) Numéro de dépôt: 17176759.3
(22) Date de dépôt: 20.06.2017
(51) Int. Cl.: A01F 12/22

(54) **ÉLÉMENT DE BATTAGE POUR MOISSONNEUSES BATTEUSES**
DRESCHELEMENT FÜR MÄHDRESCHER
THRESHING ELEMENT FOR COMBINE HARVESTER

(30) Priorité: 24.06.2016 FR 1655901
(43) Date de publication de la demande: 27.12.2017
(73) Titulaire: Taxil, 04210 Valensole (FR)
(72) Inventeur: TAXIL, Robert, 04210 Valensole (FR)
(74) Mandataire: Remy, Vincent Noel Paul

(56) Documents cités:
- WO-A1-2012/110090
- US-A- 4 889 517
- US-A1- 2009 197 655

## Description

L'invention s'intéresse au domaine des machines agricoles, et plus particulièrement aux machines de récolte du type moissonneuse batteuse.

Conventionnellement, ces machines comprennent un premier dispositif placé à l'avant de la moissonneuse, et formé d'un mécanisme pour couper les gerbes, et d'un moyen apte à diriger les gerbes en direction d'un second dispositif conçu pour séparer les grains des tiges et disposé dans la partie arrière de la moissonneuse.

Plus spécifiquement, ce second dispositif est formé d'un rotor cylindrique, animé en rotation à l'intérieur d'un stator. La surface externe du rotor supporte des éléments de battage, collaborant avec des filets hélicoïdaux disposés sur la surface interne du stator, et agencés pour détacher les grains à récolter et guider les gerbes depuis la partie avant vers la partie arrière de la moissonneuse, d'où les gerbes dépourvues des grains ressortent sous forme de paille.

L'axe du rotor est généralement orienté dans le sens avant arrière de la moissonneuse batteuse, laquelle est alors dénommée moissonneuse batteuse de type axial.

Situés préférentiellement sur la partie avant du rotor, les éléments de battage ont pour objet de détacher les grains des tiges ou des épis sur lesquels ils sont fixés, et la partie arrière est agencée pour séparer par gravité la paille des grains au niveau d'une grille située en partie basse, à l'arrière de la circonférence du stator. Des mécanismes périphériques sont prévus pour diriger les grains vers un moyen de collecte, ou pour compacter la paille et la rejeter à l'arrière de la moissonneuse batteuse.

La forme des éléments de battage requiert toutefois une grande attention en ce qu'elle conditionne fortement la qualité et la quantité des grains obtenus.

Ces éléments de battage s'élèvent en saillie depuis la surface du rotor et sont conçus pour mettre localement en compression la gerbe de paille circulant dans l'entrefer existant entre le rotor et le stator, et pour heurter ou peigner les grains, afin de les détacher des épis dans lesquels ils sont enserrés. Ils peuvent se présenter sous la forme de barres s'étendant plus ou moins axialement ou d'éléments courts disposés selon des arrangements particuliers. Leur forme peut aussi différer selon qu'ils sont disposés sur la partie avant ou sur la partie arrière du rotor.

Les éléments de battage doivent par ailleurs s'adapter aux types et aux conditions de la récolte à opérer, tels que la taille et la disposition des grains sur la tige ou dans les épis, la taille et le diamètre des tiges, ou encore l'humidité des gerbes au moment de la récolte. Aussi, la géométrie et la disposition des éléments de battage sur le rotor peuvent différer selon que l'on cherche à récolter du blé, du tournesol, du maïs ou du riz, par temps de pluie ou en saison sèche, et ont donc une forte incidence sur le rendement et l'opérabilité des moissonneuses batteuses.

L'invention s'intéresse plus particulièrement aux éléments de battage aptes à travailler dans des conditions difficiles telles que la récolte du riz, dont les grains de petite taille sont attachés à des tiges de diamètre réduit. La difficulté du travail augmente en particulier lorsque la récolte se fait dans des conditions d'humidité importante, ce qui est souvent le cas lorsque la moissonneuse batteuse doit opérer dans des rizières dont le sol est encore imbibé d'eau.

Dans ces conditions difficiles, on observe la formation de bouchons de paille qui s'installent en travers de la partie avant des éléments de battage et ont tendance à rouler sur eux-mêmes. Ces bouchons perturbent la progression de la paille dans l'entrefer et privent d'efficacité l'action des éléments de battage eux-mêmes. Ils ont également pour effet de consommer une part importante de la puissance fournie au rotor, obligeant alors l'exploitant à accroître la puissance fournie pour maintenir le rotor à sa vitesse de rotation nominale. C'est bien souvent cette augmentation de puissance consommée qui est le signe de la formation des bouchons, et qui oblige le conducteur de la moissonneuse à stopper la machine pour extraire les bouchons de paille de l'entrefer.

De nombreuses publications décrivent des éléments de battage. La publication US 4 889 517 prévoit de disposer des ergots ou des lames aptes à couper la paille pour fragmenter les tiges et éviter la formation des bouchons. La publication US 5 035 675 ou encore la publication US 6 325 714 proposent des éléments de battage comportant une seule ailette s'élevant à la verticale depuis la face supérieure et permettant d'augmenter l'impact de l'élément de battage sur les grains. Toutefois, la face frontale de cet élément de battage s'élève depuis la surface du rotor avec une très forte pente en créant un front pratiquement vertical facilitant la création de bouchons.

Et, à l'expérience, tous ces éléments de battage ne permettent pas d'obtenir de résultats satisfaisants dans les conditions difficiles évoquées ci-dessus.

L'invention a pour objet d'apporter une solution intéressante à cette problématique en proposant un élément de battage dont la géométrie s'est révélée particulièrement efficace pour la récolte du riz dans des conditions humides.

L'invention concerne un élément de battage destiné à être monté sur un rotor cylindrique. équipant une moissonneuse batteuse, de rayon donné et d'axe (XX') orienté selon la direction avant/arrière de la moissonneuse batteuse.

Cet élément de battage est associé à une surface de base cylindrique, de même axe et de même diamètre que la surface du rotor, contenant les points de contact entre l'élément de battage et la surface du rotor et confondue avec ladite surface du rotor lorsque ledit élément de battage est monté sur ledit rotor, et comprend une face supérieure formée d'une face frontale inclinée s'élevant depuis ladite surface de base jusqu'à une face de compression disposée à une hauteur h1 sensiblement constante de la surface de base, la face frontale et la face de compression formant chacune une partie de la face supérieure.

L'élément de battage se caractérise en ce qu'il supporte au moins deux ailettes de peignage de forme plane, présentant une arête frontale s'élevant depuis la surface d'une même partie de la face supérieure en faisant un angle inférieur à 45° avec ladite surface, jusqu'à une arête sommitale disposée à une hauteur sensiblement constante h2 de la surface de base, et dans lequel le rapport (h2-h1)/h2 est compris entre 0,30 et 0,50.

L'élément de battage selon l'invention permet de maintenir les tiges de paille contre la paroi du stator à une pression suffisante, ni trop importante ni trop faible, de manière à rendre efficace l'action des ailettes de peignage qui ont pour objet tout à la fois de détacher les grains de la tige et de prévenir la formation des bouchons.

Le rapport (h2-h1)/h2 définissant le rapport entre la hauteur de la surface de compression et la hauteur des ailettes doit être ajusté de manière précise de sorte que dans l'entrefer défini par l'espace libre entre la surface du rotor et le stator, la pression soit suffisante mais pas excessive d'une part, et que les ailettes de peignage puissent opérer en pénétrant dans la paille qui a tendance à rester compacte sous l'effet de la présence d'eau et de la pression d'autre part. En effet, plus la hauteur h1, définissant la hauteur de la face de compression est importante plus la mise en pression de la paille est importante, ce qui contribue à améliorer l'action des ailettes de de peignage. A contrario, à entrefer constant, .l'augmentation relative de la hauteur (h2-h1) des ailettes de peignage par rapport à la hauteur h1 de la face de compression permet de lutter efficacement contre la formation des bouchons, mais rend moins efficace le détachement des grains, en raison de la perte de pression que cela induit. Le choix du rapport entre ces deux hauteurs est donc particulièrement adapté au travail en conditions humides préférentiellement pour la récolte du riz, mais également pour la récolte du blé.

Il va de soi qu'un élément de battage du type ci-dessus convient également pour la récolte dans des conditions moins défavorables et dans lesquelles la paille est moins humide.

Le nombre d'ailettes de peignage s'élevant depuis la même partie de la face supérieure est préférentiellement égal à deux pour optimiser l'effet de peignage attendu pour détacher les grains. Et bien que ce nombre ne soit pas limité, on observe que, au-delà de deux, les ailettes ont tendance à constituer un front rectiligne ayant pour effet de favoriser la formation des bouchons.

Le dispositif de manœuvre selon l'invention peut aussi comprendre isolément, ou en combinaison, les caractéristiques suivantes :
- La face frontale comprend une arête de base; et forme un angle supérieur à 45° et préférentiellement compris entre 50° et 70° avec une droite perpendiculaire à la surface de base et passant par l'arête de base.
- La face supérieure se prolonge selon l'axe XX' en direction de l'arrière, de sorte que la partie arrière de la face frontale forme un déflecteur inscrit dans un plan faisant un angle λ avec la direction XX', et que l'arête de la base de la face frontale en contact avec la surface de base comprend une première partie avant parallèle à l'axe XX', et une seconde partie arrière faisant un angle λ avec l'axe XX'.
- l'angle λ est compris entre 0° et 45°.
- Les arêtes sommitales des ailettes de peignage dont l'arête frontale s'élève d'une même partie de la surface supérieure sont disposées sur une surface cylindrique fictive de même axe que la surface de base et de rayon R2, où R2=R1 +h2.
- L'arête sommitale des ailettes de peignage a une longueur comprise entre 30mm et 70mm, et préférentiellement comprise entre 40 mm et 60 mm.
- La hauteur (h2-h1) des ailettes de peignage par rapport à la surface de la face de compression est comprise entre 10mm et 30mm et préférentiellement comprise entre 20mm et 25mm.
- Les ailettes de peignage ont une épaisseur comprise entre 4mm et 6mm.
- Les deux ailettes de peignage dont l'arête frontale s'élève l'une et l'autre depuis une même partie de la face supérieure sont distantes l'une de l'autre d'une longueur (d) comprise entre 65 mm et 90 mm.
- L'élément de battage comprend au moins une ailette de peignage supplémentaire disposée en quinconce entre les deux ailettes de peignage dont l'arête frontale s'élève depuis une même partie de la surface supérieure, et dont l'arête sommitale est disposée à une distance de la surface de base inférieure ou égale à la hauteur h2.
- Une partie arrière d'une ailette de peignage est disposée en surplomb de la surface de base.
- La face de compression comprend au moins un orifice destiné à recevoir un moyen de fixation de l'élément de battage sur le rotor.
- Le plan des ailettes de peignage forme un angle prédéterminé avec l'axe de la surface de base compris entre 30° et 80°.

L'invention concerne également un rotor de moissonneuse batteuse, préférentiellement de type axiale, sur lequel est disposée une pluralité d'éléments de battage selon l'une quelconque des caractéristiques ci-dessus, et qui comprend également isolément ou en combinaison les caractéristiques suivantes :
- Les éléments de battage sont identiques sur l'ensemble de la surface du rotor.
- les éléments de battage sont disposés en quinconce sur la surface du rotor.

L'invention sera mieux comprise à la lecture de la description et des figures annexées, qui sont fournies à titre d'exemples et ne présentent aucun caractère limitatif, dans lesquelles :
- La figure 1 est une vue schématique d'une moissonneuse batteuse de type axial standard.
- La figure 2 est une vue du rotor sur lequel sont implantés des éléments de battage selon l'invention.
- La figure 3 est une vue de côté d'un élément de battage selon une première alternative de réalisation de l'invention.
- La figure 4 est une vue de dessus de l'élément de battage selon la première alternative de réalisation.
- La figure 5 est une vue schématique en perspective d'un élément de battage selon la première alternative de réalisation.
- La figure 6 est une vue de côté d'un élément de battage selon une seconde alternative de réalisation de l'invention.
- La figure 7 est une vue de dessus de l'élément de battage selon la seconde alternative de réalisation.
- La figure 8 est une vue schématique en perspective d'un élément de battage selon la seconde alternative de réalisation.
- Figure 9, est une vue de dessus de l'élément de battage selon une troisième alternative de réalisation.
- La figure 10 est une vue schématique en perspective d'un élément de battage selon la troisième alternative de réalisation.

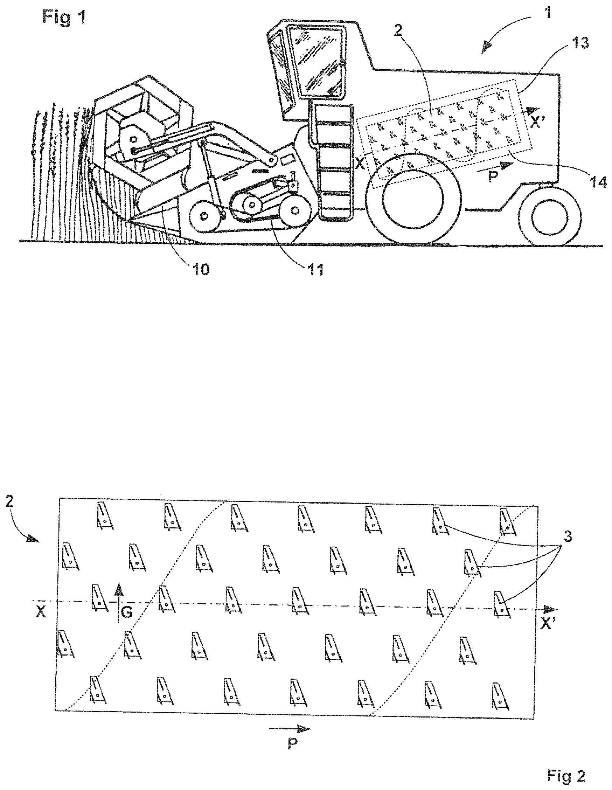

La figure 1 représente de manière schématique une moissonneuse batteuse de type axial. La partie avant de la moissonneuse comprend des moyens de coupe 10 et de transfert 11 des gerbes à moissonner. La partie arrière de la moissonneuse batteuse est occupée par les organes moteurs (non représentés) et par le mécanisme de battage proprement dit comprenant un rotor 2 en rotation dans un stator 13, autour d'un axe commun XX', orienté selon la direction allant de l'avant vers l'arrière de la moissonneuse batteuse et correspondant à la progression générale de la paille dans la machine.

Le rotor 2, représenté plus en détails à la figure 2, comporte une pluralité d'éléments de battage 3 fixés de manière amovible ou non sur sa surface. Des filets hélicoïdaux 14 (représentés en pointillés) sont soudés sur la paroi interne du stator 13.

La mise en rotation du rotor selon la direction de la flèche G entraine la paille en mouvement depuis la partie avant du stator vers la partie arrière dans la direction générale de la flèche P, selon une progression en hélice suivant sensiblement le parcours des filets hélicoïdaux 14 et orientés dans a même direction

De manière courante, les fabricants de moissonneuses batteuses proposent des machines dans lesquelles, le diamètre intérieur de la surface du stator est compris entre 550mm et 8000mm et plus généralement entre 650mm et 750mm. La hauteur des filets hélicoïdaux 14 varie entre 2mm et 50mm. Le diamètre de la surface extérieure du rotor 2 est alors compris entre 400mm et 750mm. L'entrefer entre le rotor 2 et le stator 13 a donc une valeur comprise entre 50mm et 100mm.

La hauteur totale des éléments de battage, représentée par la valeur h2, doit donc être inférieure à la valeur de cet entrefer. Toutefois, pour une meilleure circulation de la paille, il est préférable de laisser une hauteur libre de l'ordre de 20mm entre les éléments de battage 3 et les filets hélicoïdaux 14.

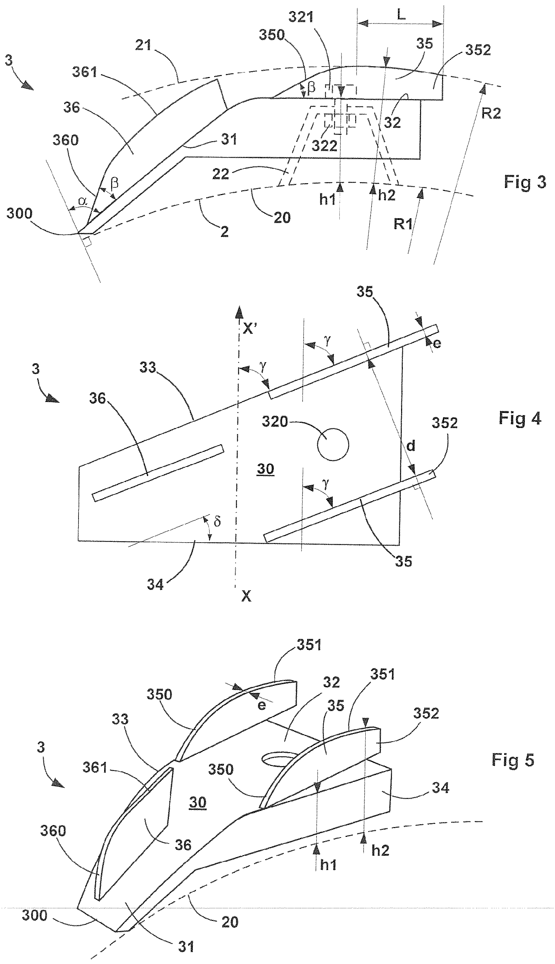

Une première alternative de réalisation de l'élément de battage 3 proprement dit est visible en détail sur les figures 3, 4 et 5

Cet élément de battage est associé à une surface de base 20. assimilée à la surface du rotor 2 lorsque l'élément de battage est monté sur ce dernier. La surface de base 20 est donc une surface cylindrique de même axe XX' et de même diamètre R1 que le rotor 2. Elle comprend l'ensemble des points de contact entre l'élément de battage 3 et la surface du rotor 2 lorsque l'élément de battage est monté sur le rotor. En raison de la grande variété des modes de montage de l'élément de battage 3 sur le rotor 2, cette surface de base 20 est souvent une surface fictive dont la position peut être définie par rapport à des points caractéristiques pré-localisés sur l'élément de battage.

L'élément de battage se présente sous la forme d'un élément monobloc métallique, réalisé par mécanosoudage ou par fonderie. Le métal formant l'élément de battage est choisi pour résister à l'abrasion.

L'élément de battage 3 présente une surface supérieure 30 se partageant en deux parties connexes l'une de l'autre, et comprenant une face frontale 31 et une face de compression 32.

La face frontale 31, s'élève depuis la surface de base 20 en formant un angle α sensiblement constant avec celle-ci. Cet angle α se définit par rapport à une droite normale à la surface de base 20, ou un rayon de la surface de base, passant par l'arête de base 300 formant généralement une ligne de contact entre ladite surface frontale 31 et la surface du rotor 2.

Cet angle α est choisi pour permettre une variation de pression progressive au sein de la paille et pour éviter la formation d'une paroi frontale trop abrupte susceptible de favoriser la formation des bouchons ; plus l'angle α est faible plus la face frontale s'élève rapidement depuis la surface du rotor et plus l'effet de front à l'origine de la formation des bouchons est sensible. L'angle α est préférentiellement supérieur à 45°, et préférentiellement compris entre 50° et 70°. Le choix d'un angle de 60° a permis d'obtenir les résultats les plus satisfaisants.

La face frontale 31 s'élève jusqu'à une face de compression 32 située à une hauteur h1 sensiblement constante de la surface de base 20, et donc de la surface du rotor 2, lorsque l'élément de battage est monté sur le rotor.

Idéalement, la face de compression forme une surface cylindrique de rayon égal à la valeur du rayon R1 augmenté de la valeur h1. Toutefois, pour des raisons de commodité de réalisation cette surface de compression 32 peut avoir une forme plane comme cela est représenté à la figure 3. Aussi, par convention dans le cadre de la présente description, la mesure de la valeur h1 s'effectue alors au point de la face de compression 32 le plus proche de la surface de base 20, et qui est définit par l'intersection avec la face de compression 32, d'un rayon du cylindre formé par la surface de base 20 perpendiculaire à ladite surface de compression 32.

La face de compression 32 comprend un orifice 320 permettant de fixer à l'aide d'un écrou 322 et d'un boulon 321, l'élément de battage 3 sur la surface du rotor. A cet effet, il est généralement prévu par les constructeurs de machines, des socles ou encore des plots de fixation 22 soudés sur la surface du rotor 2. Bien qu'elles ne soient pas standards, la forme et la position de ces plots 22, présentent toutefois des similitudes d'un constructeur à un autre, et ne nécessitent pas la mise en œuvre d'adaptations trop lourdes des éléments de battage 3.

Dans le cas de cette première alternative de réalisation, la face de compression 32 supporte au moins deux ailettes de peignage 35 présentant une arête frontale 350 s'élevant régulièrement depuis la surface de ladite face de compression 32 jusqu'à une arête sommitale 351 disposée à une hauteur constante h2 de la surface de base 20. L'arête sommitale 351 se situe donc sur un cylindre circonscrit 21 de même axe que la surface de base 20 et dont le rayon R2 est sensiblement égal au rayon R1 augmenté de la valeur de h2.

L'arête frontale 350 des ailettes de peignage 35 fait un angle d'élévation constant β avec la surface de la face de compression 32. Pour les mêmes raisons que celles qui ont été explicitées ci-dessus, cet angle β est relativement faible de manière à favoriser la mise en compression progressive des épis sur lesquels sont fixés les grains à détacher.

Pour offrir de bons résultats, l'angle β est inférieur à 45° et préférentiellement compris entre 30° et 45°.

Comme cela a déjà été évoqué, le rapport entre la valeur (h2-h1), qui représente la hauteur de l'ailette de peignage par rapport à la surface de compression et la hauteur h2 est choisie avec particulièrement d'attention. A titre d'exemple, pour un stator de 650 mm de diamètre, comportant des filets 14 d'une hauteur de 25 mm et pour un rotor de 430 mm de diamètre, on définit un entrefer de 85 mm qui représente la hauteur maximale de l'élément de battage.

En prévoyant une hauteur h2 des ailettes de peignage égale à 65 mm, on laisse une espace libre de 20 mm entre la partie supérieure de l'élément de battage et les filets hélicoïdaux 14 pour permettre la circulation de la paille. La hauteur des ailettes de peignage 35 par rapport à la face de compression, représentée par la valeur (h2-h1), est utilement comprise entre 10 mm et 30 mm, et les meilleurs résultats ont été obtenus avec une valeur (h2-h1) comprise entre 20 mm et 25 mm. La face de compression 32 peut donc utilement se situer à une hauteur h1 comprise entre 40 mm et 45 mm. A titre expérimental, une hauteur h1 de 40 mm a donné d'excellents résultats pour un travail dans des rizières partiellement détrempées. La valeur (h2-h1) représente alors environ la moitié de la valeur h1.

Pour une bonne efficacité, la longueur de l'arête sommitale 351 est utilement comprise entre 30 mm et 60 mm, et préférentiellement comprise entre 40 mm et 50 mm. De même, les ailettes de peignage, qui ont une forme sensiblement plane, ont une épaisseur constante comprise entre 4mm et 8mm. A cet égard, il a été mis en évidence qu'une épaisseur trop importante des ailettes ne permettait pas de travailler efficacement des tiges de petit diamètre comme les tiges supportant les grains de riz.

De manière à canaliser efficacement le flux de matière dans l'entrefer et optimiser la mise en compression et l'action de peignage et de détachement des grains, la distance d entre les deux ailettes 35 est utilement comprise entre 65 mm et 90 mm. Une distance d trop importante réduit l'effet de peignage, et une distance d trop faible augmente l'effet de front et ne permet pas de lutter efficacement contre la formation des bouchons.

Il serait tout à fait possible de prévoir un plus grand nombre d'ailettes de peignage disposées sur la face de compression. Toutefois, il a été observé que la présence d'ailettes de peignage supplémentaires au-delà de deux était propice à la formation d'un front rectiligne favorisant la formation de bouchons.

Pour améliorer l'efficacité des ailettes de peignage 35 situées sur la face de compression 32, il peut être utile de prolonger une partie 352 desdites ailettes au-delà de la face de compression 32, de sorte que les ailettes surplombent directement la surface de base 20 ou la surface du rotor 2 lorsque l'élément de battage est monté sur ledit rotor. Cet arrangement particulier permet de faire baisser brusquement la pression exercée sur les tiges et d'amorcer une réorganisation de celles-ci pour éviter la formation de bouchons au niveau des éléments de battage disposés en aval sur le rotor, tout en poursuivant l'effet de peignage sur les grains emprisonnés jusque-là au sein des tiges compactées.

Pour réduire l'effet de front et améliorer le peignage, l'invention prévoit également la présence d'une ailette de peignage supplémentaire 36 disposée sur la face frontale 31 de l'élément de battage 3. L'ailette de peignage 36 est intercalée entre les deux ailettes de peignage 35, et placée en avant et en quinconce par rapport à ces deux ailettes de peignage.

Comme cela est représenté à la figure 3 ou à la figure 5, cette ailette de peignage supplémentaire 36 peut avoir une forme (longueur, hauteur, disposition de l'arête frontale et de l'arête sommitale) sensiblement identique à la forme des ailettes 35 de peignage disposées sur la face de compression. Le plan de l'ailette de peignage 36 est parallèle au plan des ailettes de peignage 35. Dans le cas de cette première alternative de réalisation, l'ailette supplémentaire 36 a une arête sommitale 361 qui s'élève à une hauteur inférieure à la hauteur h2 par rapport à la surface de base 20 et qui n'est donc pas inscrite sur la surface 21. Cette forme de réalisation n'est pas limitative, et l'ailette de peignage 36 pourrait tout à fait se prolonger sur la surface de compression de sorte que son arête sommitale 361 soit située à une distance h2 de la surface de compression 32, tout en veillant à conserver la disposition en quinconce par rapport aux ailettes de peignage 35 dont l'arête frontale 350 s'élève de puis la face de compression 32.

Pour éviter une usure prématurée du boulon 321, il peut être utile d'aligner l'orifice 320 avec l'ailette de peignage 36.

Les ailettes de peignage 35 et 36 font un angle γ avec l'axe XX' du rotor usuellement compris entre 30° et 80°. La position relative dans la direction XX' de l'ailette de peignage supplémentaire 36 disposée en quinconce par rapport aux deux ailettes de peignage 35 dont l'arête frontale s'élève depuis la face de compression 32, peut utilement s'ajuster en fonction de la valeur de l'angle γ de manière à optimiser l'efficacité conjuguée de l'action de peignage procurée par les arêtes sommitales de chacune des ailettes de peignage.

L'élément de battage 3 comporte enfin une première et une seconde face latérale, respectivement 33 et 34. Selon cette première alternative de réalisation, la première face latérale 33 est sensiblement parallèle aux ailettes de peignage et fait donc un angle γ avec l'axe de la surface de base 20 ou avec l'axe XX' du rotor lorsque l'élément de peignage est monté sur le rotor.

La deuxième face latérale 34 fait un angle δ compris entre 30° et 45° avec la première face latérale 33. Dans le cas d'espèce, cette deuxième face latérale 34 est disposée perpendiculairement à l'axe XX' de la surface de base 20, de sorte que la valeur de l'angle δ est égale à 90° diminué de la valeur de l'angle γ.

Toutes ces valeurs numériques sont obtenues sur la base de tests et de résultats expérimentaux réalisés sur des machines couramment proposées dans le commerce. Ces valeurs sont également en rapport avec la taille des tiges et des grains de riz rencontrée dans les exploitations agricoles.

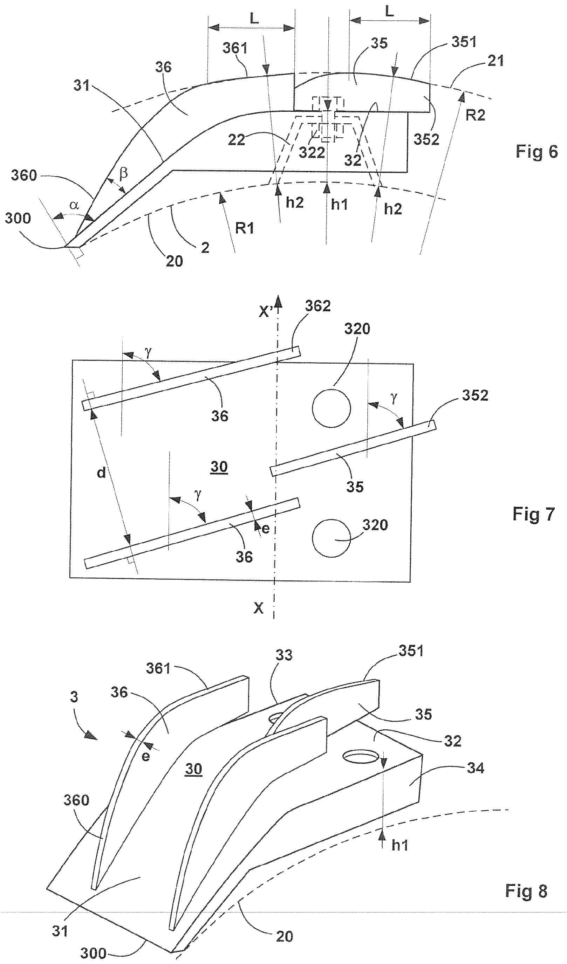

Les figures 6, 7 et 8 illustrent une deuxième alternative de réalisation de l'invention dans laquelle deux ailettes de peignage 36 ont une arête frontale qui s'élève, en faisant un angle β avec la surface de la face frontale 31, depuis ladite face frontale 31 jusqu'à ce que leur arête sommitale soit disposée à une hauteur h2 de la surface de base 20. Les arêtes sommitales 361 de ces deux ailettes de peignage 36 sont donc inscrites sur la surface 21.

Les deux ailettes 36 sont disposées à une distance d l'une de l'autre.

Les valeurs des angles α, et β ainsi que le rapport (h2-h1)/h2, les valeurs de l'épaisseur e, de la longueur de l'arête sommitale L, de la distance d et de l'angle y, sont inscrites dans les mêmes limites que celles qui ont été proposées pour la première alternative de réalisation décrite ci-dessus.

De manière similaire, il est prévu une ailette de peignage supplémentaire 35, disposée en quinconce par rapport aux deux ailettes 36, et placée entre ces deux ailettes de peignage, et en arrière de celles-ci. Cette ailette supplémentaire 35 a une arête frontale qui s'élève depuis la surface de la face de compression 32 en faisant un angle β inférieur à 45° avec la surface de cette face 32. L'arête sommitale 351 de cette ailette de peignage supplémentaire 35 est disposée à une hauteur h2 de la surface de base 20, identique à la hauteur h2 des ailettes 36. L'arête sommitale 351 de l'ailette supplémentaire 35 est donc inscrite sur la surface 21.

Comme pour la première alternative de réalisation, une partie 362, 352 des ailettes de peignage 35 ou 36 peut être disposée en surplomb de la surface du rotor 2.

Le plan de chacune des ailettes de peignage 35 et 36 forme un angle γ par rapport à l'axe XX' du rotor également compris entre 30° et 60°.

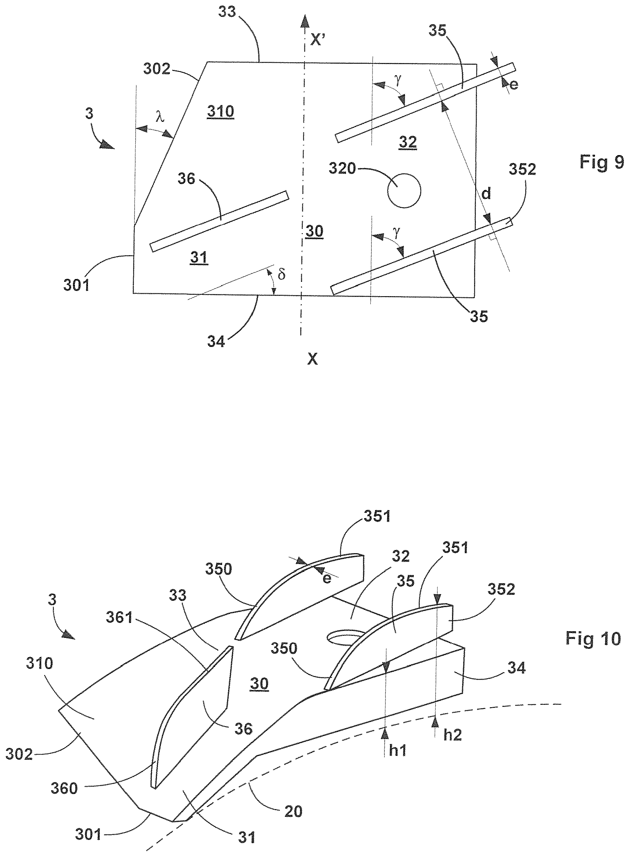

Les figures 9 et 10 illustrent une troisième alternative de réalisation de l'invention dans laquelle la face supérieure (30) se prolonge selon l'axe XX' en direction de l'arrière selon la direction XX' de sorte qu'une partie de la face frontale peut être orientée en direction de l'arrière pour former un déflecteur 310 formant un plan faisant un angle λ avec la direction XX'. L'arête de la base 300 de la face frontale en contact avec la surface de base comprend alors une première partie avant 301 parallèle à l'axe XX', et une seconde partie arrière 302 faisant un angle λ avec l'axe avec l'axe XX'. L'angle λ est utilement compris entre 0° et 45°.

Cet arrangement particulier a pour objet de favoriser la progression de la paille dans le sens hélicoïdale en allant de l'avant vers l'arrière de la moissonneuse batteuse.

L'invention prévoit également un rotor 2 équipé d'une pluralité d'élément de battage selon les caractéristiques exposées ci-dessus et illustré schématiquement à la figure 2.

On notera ici qu'il s'est révélé particulièrement avantageux au cours des essais expérimentaux dans des rizières humides, d'équiper l'ensemble du rotor avec des éléments de battage identiques et conformes à ceux de l'invention sans distinguer, comme cela se fait usuellement, les éléments de battage situés en amont du rotor et plus particulièrement conçus pour détacher les grains, des éléments de battage situés en aval du rotor et conçus pour la séparation des grains et de la paille.

Pour éviter les effets de fronts, propices à la formation de bouchons, les éléments de battage sont disposés en quinconce sur la surface du rotor.

### NOMENCLATURE

1 Moissonneuse batteuse axiale.
10 Moyens de coupe.
11 Moyens de transfert.
13 Stator.
14 Filets hélicoïdaux.
2 Rotor cylindrique.
20 Surface de base.
21 Cylindre circonscrit.
22 Socle de fixation de l'élément de battage sur le rotor.
3 Elément de battage.
30 Surface supérieure de l'élément de battage.
300 Arête de base de la face frontale.
301 Première partie avant de l'arête de la base de la face frontale parallèle à l'axe XX' du rotor.
302 Seconde partie arrière de l'arête de la base de la face frontale faisant un angle λ avec l'axe XX' du rotor.
31 Face frontale de l'élément de battage.
310 Partie de la face frontale faisant office de déflecteur.
32 Face de compression de l'élément de battage.
320 Orifice.
321 Boulon.
322 Ecrou.
33 Première face latérale.
34 Seconde face latérale.
35 Ailette de peignage dont l'arête frontale s'élève depuis la face de compression.
350 Arête frontale de l'ailette de peignage 35.
351 Arête sommitale de l'ailette de peignage 35.
36 Ailette de peignage dont l'arête frontale s'élève depuis la face frontale.
360 Arête frontale de l'ailette de peignage 36.
361 Arête sommitale de l'ailette de peignage 36.
352, 362 Partie de l'ailette de peignage disposée en surplomb de la surface de base.
R1 Rayon de la surface de base.
R2 Rayon du cylindre circonscrit.
α Angle d'élévation de la face frontale au niveau de l'arête de base de la face frontale.
β Angle d'élévation de l'arête de l'ailette de peignage.
γ Angle formé par l'ailette de peignage avec l'axe du rotor.
δ Angle formé par la première et la seconde face latérale de l'élément de battage.
λ Angle formé par la partie arrière de l'arête de la base de la face frontale avec l'axe XX' du rotor.
h1 Elévation de la face de compression par rapport à la surface de base.
h2 Elévation de l'arête sommitale par rapport à la surface de base.
d Distance entre les ailettes de peignage.
e Epaisseur de l'ailette de peignage.
L Longueur de l'arête sommitale de l'ailette de peignage.
P Sens de progression de la paille dans le stator.
G Sens de rotation du rotor.
XX' Axe du stator selon la direction allant de l'avant vers l'arrière.

## Revendications

1. Elément de battage (3) destiné à être monté sur un rotor cylindrique (2) équipant une moissonneuse batteuse (1), de rayon (R1) donné et d'axe (XX') orienté selon la direction avant/arrière de la moissonneuse batteuse (1) donné , associé à une surface de base (20) cylindrique, de même axe (XX') et de même diamètre que la surface du rotor (2), contenant les points de contact entre l'élément de battage (3) et la surface du rotor (2) et confondue avec ladite surface du rotor (2) lorsque ledit élément de battage (3) est monté sur ledit rotor (2), comprenant une face supérieure (30) formée d'une face frontale (31) inclinée s'élevant depuis ladite surface de base (20) jusqu'à une face de compression (32) disposée à une hauteur h1 de la surface de base (20), ladite face de compression ayant
- une forme cylindrique de rayon égal au rayon de la surface de base augmenté de ladite hauteur (R+h1), ou
- une forme plane, dans laquelle la mesure de ladite hauteur (h1) s'effectue à l'intersection avec la face de compression (32), d'un rayon du cylindre formé par la surface de base (20) perpendiculaire à ladite surface de compression (32),
la face frontale (31) et la face de compression (32) formant chacune une partie de la face supérieure (30) **caractérisé en ce que** ledit élément de battage supporte au moins deux ailettes de peignage (35; 36) de forme plane, présentant une arête frontale (350; 360) s'élevant depuis la surface d'une même partie (31, 32) de la face supérieure (30) en faisant un angle (β) inférieur à 45° avec ladite surface, jusqu'à une arête sommitale (351; 361) disposée à une hauteur constante h2 de la surface de base (20), et dans lequel le rapport (h2-h1)/h2 est compris entre 0,30 et 0,50.

2. Elément de battage (3) selon la revendication 1, dans lequel la face frontale (31) comprend une arête de base (300), et dans laquelle ladite face frontale (31) forme un angle (α) supérieur à 45° et préférentiellement compris entre 50° et 70° avec une droite normale à la surface de base (20) et passant par l'arête de base (300).

3. Elément de battage selon la revendication 1 ou la revendication 2, dans lequel la face supérieure (30) se prolonge selon l'axe XX' en direction de l'arrière, de sorte que la partie arrière de la face frontale (310) forme un déflecteur inscrit dans un plan faisant un angle λ avec la direction XX', et que l'arête de la base de la face frontale en contact avec la surface de base comprend une première partie avant parallèle à l'axe XX', et une seconde partie arrière faisant un angle λ avec l'axe avec l'axe XX'.

4. Elément de battage selon la revendication 3, dans lequel l'angle λ est compris entre 0° et 45°.

5. Elément de battage (3) selon l'une quelconque des revendications 1 à 4, dans lequel les arêtes sommitales (351; 361) des ailettes de peignage dont l'arête frontale (350; 360) s'élève d'une même partie (31, 32) de la surface supérieure (30) sont disposées sur une surface cylindrique fictive (21) de même axe que la surface de base (20) et de rayon R2, où R2=R1 +h2.

6. Elément de battage (3) selon l'une quelconque des revendications 1 à 5, dans lequel l'arête sommitale (351; 361) des ailettes de peignage (35; 36) a une longueur (L) comprise entre 30mm et 70mm, et préférentiellement comprise entre 40 mm et 60 mm.

7. Elément de battage (3) selon l'une quelconque des revendications 1 à 6, dans lequel la hauteur (h2-h1) des ailettes de peignage (35; 36) par rapport à la surface de la face de compression (32) est comprise entre 10mm et 30mm et préférentiellement comprise entre 20mm et 25mm.

8. Elément de battage (3) selon l'une quelconque des revendications 1 à 7, dans lequel les ailettes de peignage (35; 36) ont une épaisseur comprise entre 4mm et 8mm.

9. Elément de battage (3) selon l'une des revendications 1 à 8, dans lequel les deux ailettes de peignage (35; 36) dont l'arête frontale s'élève l'une et l'autre depuis une même partie de la face supérieure sont distantes l'une de l'autre d'une longueur (d) comprise entre 65 mm et 90 mm.

10. Elément de battage (3) selon l'une quelconque des revendications 1 à 9, comprenant au moins une ailette de peignage supplémentaire (36; 35), disposée en quinconce entre les deux ailettes de peignage dont la l'arête frontale s'élève depuis une même partie de la surface supérieure, et dont l'arête sommitale est disposée à une distance de la surface de base (20) inférieure ou égale à la hauteur h2.

11. Elément de battage (3) selon l'une quelconque des revendications 1 à 10, dans lequel une partie (352; 362) d'une ailette de peignage (35; 36) est disposée en surplomb de la surface de base (20).

12. Elément de battage (3) selon l'une quelconque des revendications 1 à 11, dans lequel la face de compression (32) comprend au moins un orifice (320) destiné à recevoir un moyen de fixation de l'élément de battage (3) sur le rotor (2).

13. Elément de battage (3) selon l'une quelconque des revendications 1 à 12, dans lequel le plan des ailettes de peignage (35, 36) forme un angle (γ) prédéterminé avec l'axe (XX') de la surface de base (20) compris entre 30° et 80°.

14. Rotor (2) de moissonneuse batteuse (1), préférentiellement de type axiale, sur la surface duquel est disposée une pluralité d'éléments de battage (3) selon l'une quelconque des revendications 1 à 13.

15. Rotor (2) selon la revendication 14, dans lequel les éléments de battage (3) sont disposés en quinconce les uns par rapport aux autres sur la surface du rotor.

## Patentansprüche

1. Dreschelement (3) für die Montage an einem zylindrischen Rotor (2), mit dem ein Mähdrescher (1) versehen ist, mit einem bestimmten Radius (R1) und einer bestimmten Achse (XX'), die in der Vorwärts-/Rückwärts-Richtung des Mähdreschers (1) ausgerichtet ist, das einer zylindrischen Basisoberfläche (20) zugeordnet ist, mit der gleichen Achse (XX') und dem gleichen Durchmesser wie die Oberfläche des Rotors (2), welche die Kontaktpunkte zwischen dem Dreschelement (3) und der Oberfläche des Rotors (2) enthält und mit der Oberfläche des Rotors (2) zusammenfällt, wenn das Dreschelement (3) an dem Rotor (2) montiert ist, umfassend eine obere Fläche (30), die von einer geneigten Stirnfläche (31) gebildet ist, die sich von der Basisoberfläche (20) bis zu einer Kompressionsfläche (32), die auf einer Höhe h1 der Basisoberfläche (20) angeordnet ist, erhebt, wobei die Kompressionsfläche (32) Folgendes aufweist:
- eine zylindrische Form mit einem Radius gleich dem Radius der Basisoberfläche erhöht um die Höhe (R+h1), oder
- eine ebene Fläche, wobei das Messen der Höhe (h1) am Schnittpunkt mit der Kompressionsfläche (32) eines Radius des Zylinders, der von der Basisoberfläche (20) senkrecht zu der Kompressionsoberfläche (32) gebildet ist, erfolgt,
wobei die Stirnfläche (31) und die Kompressionsfläche (32) jede einen Teil der oberen Fläche (30) bilden, **dadurch gekennzeichnet, dass** das Dreschelement wenigstens zwei Kämmrippen (35; 36) mit flächiger Form haltert, die eine Stirnkante (350; 360) aufweisen, die sich von der Oberfläche eines gleichen Teils (31, 32) der oberen Fläche (30) unter Bildung eines Winkels (β) kleiner als 45° mit der Oberfläche bis zu einer Scheitelkante (351; 361) erhebt, die in einer konstanten Höhe h2 der Basisoberfläche (20) angeordnet ist, und wobei das Verhältnis (h2-h1)/h2 zwischen 0,30 und 0,50 beträgt.

2. Dreschelement (3) nach Anspruch 1, wobei die Stirnfläche (31) eine Basiskante (300) umfasst, und wobei die Stirnfläche (31) einen Winkel (α) mit einer Geraden, welche die Normale zu der Basisoberfläche (20) ist und durch die Basiskante (300) verläuft, bildet, der größer ist als 45° und vorzugsweise zwischen 50° und 70° beträgt.

3. Dreschelement (3) nach Anspruch 1 oder Anspruch 2, wobei die obere Fläche (30) sich gemäß der Achse XX' nach hinten fortsetzt, so dass der hintere Teil der Stirnfläche (310) einen Deflektor bildet, der in einer Ebene liegt, die mit der Richtung XX' einen Winkel λ bildet, und dass die Kante der Basis der Stirnfläche in Kontakt mit der Basisoberfläche einen ersten vorderen Teil umfasst, der zu der Achse XX' parallel ist, und einen zweiten Teil umfasst, der mit der Achse mit der Achse XX' einen Winkel λ bildet.

4. Dreschelement (3) nach Anspruch 3, wobei der Winkel λ zwischen 0° und 45° beträgt.

5. Dreschelement (3) nach einem der Ansprüche 1 bis 4, wobei die Scheitelkanten der Kämmrippen, deren Stirnkante sich von einem gleichen Teil (31, 32) der oberen Oberfläche (30) erhebt, auf einer fiktiven zylindrischen Oberfläche (21) mit der gleichen Achse wie die Basisoberfläche (20) und mit dem Radius R2 angeordnet sind, wobei R2=R1 +h2.

6. Dreschelement (3) nach einem der Ansprüche 1 bis 5, wobei die Scheitelkante (351; 361) der Kämmrippen (35; 36) eine Länge (L) aufweist, die zwischen 30 mm und 70 mm beträgt, und vorzugsweise zwischen 40 mm und 60 mm beträgt.

7. Dreschelement (3) nach einem der Ansprüche 1 bis 6, wobei die Höhe (h2-h1) der Kämmrippen (35; 36) gegenüber der Oberfläche der Kompressionsfläche (32) zwischen 10 mm und 30 mm beträgt und vorzugsweise zwischen 20 mm und 25 mm beträgt.

8. Dreschelement (3) nach einem der Ansprüche 1 bis 7, wobei die Kämmrippen (35; 36) eine Dicke aufweisen, die zwischen 4 mm und 8 mm beträgt.

9. Dreschelement (3) nach einem der Ansprüche 1 bis 8, wobei die zwei Kämmrippen (35; 36), deren Stirnkante sich die eine und die andere von einem gleichen Teil der oberen Fläche erhebt, voneinander um eine Länge (d) beabstandet sind, die zwischen 65 mm und 90 mm beträgt.

10. Dreschelement (3) nach einem der Ansprüche 1 bis 9, umfassend wenigstens eine weitere Kämmrippe (35; 36), die versetzt zwischen den zwei Kämmrippen angeordnet ist, deren Stirnkante sich von einem gleichen Teil der oberen Oberfläche erhebt, und deren Scheitelkante in einem Abstand von der Basisoberfläche (20) angeordnet ist, der kleiner oder gleich der Höhe h2 ist.

11. Dreschelement (3) nach einem der Ansprüche 1 bis 10, wobei ein Teil (352; 362) einer Kämmrippe (35; 36) über die Basisoberfläche (20) auskragend angeordnet ist.

12. Dreschelement (3) nach einem der Ansprüche 1 bis 11, wobei die Kompressionsfläche (32) wenigstens eine Öffnung (320) umfasst, die zur Aufnahme eines Mittels zur Befestigung des Dreschelements (3) an dem Rotor (2) bestimmt ist.

13. Dreschelement (3) nach einem der Ansprüche 1 bis 12, wobei die Ebene der Kämmrippen (35; 36) mit der Achse (XX') der Basisoberfläche (20) einen vorbestimmten Winkel (γ) bildet, der zwischen 30° und 80° beträgt.

14. Rotor (2) für Mähdrescher (1), vorzugsweise des axialen Typs, auf dessen Oberfläche eine Mehrzahl von Dreschelementen (3) nach einem der Ansprüche 1 bis 13 angeordnet ist.

15. Rotor (2) nach Anspruch 14, wobei die Dreschelemente (3) auf der Oberfläche des Rotors relativ zu einander versetzt angeordnet sind.

## Claims

1. Threshing element (3) intended to be mounted on a cylindrical rotor (2) fitted on a combine harvester (1), of given radius (R1) and of given axis (XX') directed in the front/rear direction of the combine harvester (1), associated with a cylindrical base surface (20), of the same axis (XX') and of the same diameter as the surface of the rotor (2), containing the points of contact between the threshing element (3) and the surface of the rotor (2) and coincident with said surface of the rotor (2) when said threshing element (3) is mounted on said rotor (2), comprising an upper side (30) formed by an inclined front side (31) rising from said base surface (20) up to a compression side (32) arranged at a height h1 from the base surface (20), said compression side having
- a cylindrical shape of radius equal to the radius of the base surface increased by said height (R+h1), or
- a flat shape, wherein said height (h1) is measured at the intersection with the compression side (32) of a radius of the cylinder formed by the base surface (20) perpendicular to said compression surface (32),
the front side (31) and the compression side (32) each forming a portion of the upper side (30) **characterised in that** said threshing element supports at least two flat combing fins (35; 36), having a front edge (350; 360) rising from the surface of a given portion (31, 32) of the upper side (30) forming an angle (β) of less than 45° with said surface, up to a top edge (351; 361) arranged at a constant height h2 from the base surface (20), and wherein the ratio (h2-h1)/h2 is between 0.30 and 0.50.

2. Threshing element (3) according to claim 1, wherein the front side (31) comprises a base edge (300), and wherein said front side (31) forms an angle (α) greater than 45° and preferably between 50° and 70° with a straight line normal to the base surface (20) and crossing the base edge (300).

3. Threshing element according to claim 1 or 2, wherein the upper side (30) extends along the axis XX' towards the rear, such that the rear portion of the front side (310) forms a deflector lying in a plane forming an angle λ with the direction XX', and such that the base edge of the front side in contact with the base surface comprises a first front portion parallel to the axis XX', and a second rear portion forming an angle λ with the axis XX'.

4. Threshing element according to claim 3, wherein the angle λ is between 0° and 45°.

5. Threshing element (3) according to any one of claims 1 to 4, wherein the top edges (351; 361) of the combing fins whose front edges (350; 360) rise from a given portion (31, 32) of the upper surface (30) are arranged on a fictitious cylindrical surface (21) of the same axis as the base surface (20) and of radius R2, where R2=R1 +h2.

6. Threshing element (3) according to any one of claims 1 to 5, wherein the length (L) of the top edges (351; 361) of the combing fins (35; 36) is between 30 mm and 70 mm, and preferably between 40 mm and 60 mm.

7. Threshing element (3) according to any one of claims 1 to 6, wherein the height (h2-h1) of the combing fins (35; 36) from the surface of the compression side (32) is between 10 mm and 30 mm, and preferably between 20 mm and 25 mm.

8. Threshing element (3) according to any one of claims 1 to 7, wherein the depth of the combing fins (35; 36) is between 4 mm and 8 mm.

9. Threshing element (3) according to one of claims 1 to 8, wherein the two combing fins (35; 36), whose front edges rise from a given portion of the upper side, are separated from one another by a distance (d) of between 65 mm and 90 mm.

10. Threshing element (3) according to any one of claims 1 to 9, comprising at least one additional combing fin (36; 35), arranged staggered between the two combing fins whose front edges rise from the same portion of the upper surface and whose top edges are arranged at a distance from the base surface (20) of less than or equal to the height h2.

11. Threshing element (3) according to any one of claims 1 to 10, wherein a portion (352; 362) of a combing fin (35; 36) is arranged above the base surface (20).

12. Threshing element (3) according to any one of claims 1 to 11, wherein the compression side (32) comprises at least one hole (320) intended to receive a means for attaching the threshing element (3) to the rotor (2).

13. Threshing element (3) according to any one of claims 1 to 12, wherein the plane of the combing fins (35, 36) forms a predetermined angle (γ) with the axis (XX') of the base surface (20) of between 30° and 80°.

14. Rotor (2) of combine harvester (1), preferably of axial type, with a plurality of threshing elements (3) according to any one of claims 1 to 13 arranged on its surface.

15. Rotor (2) according to claim 14, wherein the threshing elements (3) are arranged staggered relative to one another on the surface of the rotor.
